# DEMANDE DE BREVET EUROPEEN

(11) **EP 0 806 601 A2**
(43) Date de publication de la demande: **12.11.1997**
(21) Numéro de dépôt: 97400963.1
(22) Date de dépôt: 29.04.1997
(51) Int. Cl.: F16M 7/00, G01M 11/04

(54) **Systéme pour supporter un appareillage de grandes dimensions en particulier un banc optique**

(30) Priorité: 09.05.1996 FR 9605776
(71) Demandeur: GIAT INDUSTRIES, 78000 Versailles (FR)
(72) Inventeur: Sauvageot, Paul, 65000 Tarbes (FR)

(57) **Abrégé**

Système pour supporter un appareillage de grandes dimensions, en particulier un banc optique (1), l'appareillage comprenant un ensemble de composants (1a, 1b, 1c.....) montés sur un châssis (3) d'une seule pièce, caractérisé en ce que le système est du type isostatique et comprend au moins un ensemble de supports verticaux constitués par des vérins (7) qui sont articulés d'une part, à une structure fixe (17) et d'autre part, au châssis (3) pour définir des points d'appui sur lesquels le châssis (3) est posé et/ou de points de suspension auxquels le châssis (3) est suspendu, et en ce que les vérins (7) formant les supports verticaux sont alimentés en fluide sous pression à partir de plusieurs réseaux hydrauliques (R1, R2, R3).

## Description

La présente invention concerne un système pour supporter un appareillage de grandes dimensions, en particulier un banc optique.

Dans le domaine optique, les appareillages sont le plus souvent constitués par un ensemble de composants répartis en plusieurs étages successifs qu'il faut positionner avec précision les uns par rapports aux autres.

D'une manière générale, l'ensemble des composants est monté sur un châssis auquel on demande de remplir un certain nombre de fonctions qui sont nécessaires pour assurer une bonne fiabilité de fonctionnement du banc optique.

Parmi ces fonctions, on peut notamment citer celles qui consistent :
- à isoler le banc optique des vibrations,
- à éviter des déformations et des contraintes mécaniques pouvant résulter de variations de températures, par exemple,
- à rattraper les dérives long terme de la géométrie du sol,
- à être fiable, robuste et de longue durée,
- à faciliter les opérations de maintenance lorsqu'un élément du châssis est défectueux, et
- à pouvoir éventuellement repositionner le banc optique suivant les six degrés de liberté.

Cependant, pour définir la structure du châssis, il faut également tenir compte du fait que le banc optique ne constitue pas nécessairement une charge homogène. En effet, la charge peut être non seulement lourde mais également hétérogène du fait qu'elle comprend par exemple, plusieurs étages qui n'ont pas nécessairement la même structure et donc la même masse. Il peut alors en résulter un comportement mécanique complexe qu'il faut alors maîtriser.

Pour supporter des bancs optiques de grandes dimensions, c'est-à-dire qui présentent une grande longueur et/ou une grande surface, il est essentiellement connu deux architectures de châssis.

Selon une première architecture connue, le châssis est rigide et formé d'une seule pièce qui repose ou est fixée au sol. Cette solution, bien que simple, présente toutefois l'inconvénient de conduire à un châssis de masse importante non repositionnable dans l'espace suivant les six degrés de liberté.

Selon une seconde architecture connue, le châssis est scindé en plusieurs segments, mais cette solution nécessite alors des ajustements délicats entre les différents segments du châssis pour les positionner correctement les uns par rapport aux autres. Cette solution permet cependant de pouvoir envisager un repositionnement actif de chaque segment par rapport aux autres segments du châssis, mais cela conduit à un nombre élevé de points de mesure, à des actionneurs qui sont actifs en permanence et à un nombre important de boucles d'asservissement. Autrement dit, il en résulte une architecture complexe et délicate à mettre en oeuvre.

Le but de l'invention est de proposer une nouvelle architecture de support d'un appareillage de grandes dimensions, qui pallie notamment les inconvénients précités.

Pour atteindre ce but, l'invention propose un système pour supporter un appareillage de grandes dimensions, en particulier un banc optique, l'appareillage comprenant un ensemble de composants montés sur un châssis d'une seule pièce, système qui est caractérisé en ce qu'il est du type isostatique et comprend au moins un ensemble de supports sensiblement verticaux constitués par des vérins qui sont articulés d'une part, à une structure fixe et, d'autres part, au châssis pour définir des points d'appui sur lequel le châssis est posé et/ou des points de suspension auxquels le châssis est suspendu, la position et le nombre de ces points d'appui et/ou de suspension étant choisis pour que la masse du châssis soit régulièrement répartie entre ces différents points, et en ce que les vérins formant les supports verticaux sont alimentés en fluide sous pression à partir de plusieurs réseaux hydrauliques.

Selon une autre caractéristique de l'invention, les vérins formant les supports verticaux sont répartis en plusieurs ensembles pour pouvoir contrôler plusieurs degrés de liberté, les vérins de chaque ensemble étant alimentés à partir d'un réseau hydraulique actif relié à une unité de dosage de fluide pour repositionner le châssis suivant le degré de liberté contrôlé par chaque ensemble de vérins.

D'une manière générale, le châssis est par exemple de forme parallélépipédique rectangle avec deux faces respectivement supérieure et inférieure, deux faces latérales longitudinales et deux faces latérales d'extrémité, les points d'appui et/ou de suspension du châssis étant situés sur les faces supérieure et/ou inférieure de celui-ci, le système comprenant également des supports latéraux qui sont articulés, d'une part, à la structure fixe et, d'autre part, à une face latérale longitudinale du châssis, ainsi que des supports d'extrémité qui sont articulés d'une part, à la structure fixe et, d'autre part, à une face latérale d'extrémité du châssis, les supports latéraux et d'extrémité étant avantageusement constitués par des vérins.

Le système supporte le châssis d'une manière isostatique par l'intermédiaire des vérins formant les supports verticaux, latéraux et d'extrémité alimentés en fluide sous pression par des réseaux hydrauliques, sachant qu'il est également possible de repositionner le châssis suivant plusieurs degrés de liberté en rendant actif cet isostatisme en dosant le fluide d'alimentation des vérins à travers les réseaux hydrauliques.

Selon un mode de réalisation du système selon l'invention :
- les vérins des supports verticaux qui définissent les points d'appui et/ou de suspension du châssis sont répartis suivant trois réseaux hydrauliques actifs pour assurer en plus un contrôle du positionnement du châssis suivant trois degrés de liberté,
- les supports latéraux du système sont constitués par des vérins qui sont avantageusement répartis suivant deux réseaux hydrauliques actifs pour assurer en plus un contrôle du positionnement du châssis suivant deux autres degrés de liberté, et
- les supports d'extrémité du système sont constitués par au moins un vérin relié à un réseau hydraulique actif pour assurer un contrôle suivant le sixième degré de liberté.

Ainsi, selon ce premier mode de réalisation, le châssis peut être posé ou suspendu au système de support avec possibilité de repositionner dans l'espace le châssis puisque le système permet de modifier la position du châssis suivant les six degrés de liberté. Bien entendu, une solution mixte posé et suspension peut être envisagée pour supporter le châssis.

En variante de ce premier mode de réalisation, les supports latéraux et/ou d'extrémité du système peuvent être constitués par des biellettes articulées.

Selon un second mode de réalisation qui est plus particulièrement adapté dans le cas d'un châssis long, haut et étroit qui est suspendu au système de support :
- les vérins des supports verticaux qui définissent les points de suspension du châssis sont répartis suivant deux réseaux hydrauliques actifs pour assurer un contrôle du positionnement du châssis suivant deux degrés de liberté,
- les supports latéraux du système sont constitués par des vérins qui sont répartis suivant trois réseaux hydrauliques actifs pour assurer un contrôle du positionnement du châssis suivant trois autres degrés de liberté, et
- les supports d'extrémité du système sont constitués par au moins un vérin relié à un réseau hydraulique actif pour assurer le contrôle du positionnement du châssis suivant le sixième degré de liberté.

En variante de ce second mode de réalisation, les supports d'extrémité du système peuvent être constitués par des biellettes articulées.

D'une manière générale, chaque réseau hydraulique actif est relié à une unité de dosage indépendante qui alimente en fluide les vérins du réseau.

Dans les modes de réalisation envisagés précédemment, chaque vérin comporte par exemple un corps creux dans lequel est monté un piston coulissant qui partage le volume intérieur du corps du vérin en deux chambres à volume variable, le piston se prolongeant d'un côté par une tige qui fait saillie à l'extérieur du corps du vérin, le corps du vérin étant articulé à la structure fixe alors que l'extrémité libre de la tige de piston est articulée au châssis.

Dans cet exemple, une chambre des vérins des supports verticaux, aussi bien dans le cas d'un châssis posé que suspendu, est alimentée en fluide sous pression, alors que l'autre chambre de ces vérins est mise à l'échappement par l'intermédiaire d'un clapet, par exemple.

Au contraire, les deux chambres des vérins des supports latéraux ou d'extrémité sont toutes les deux remplies de fluide, alors que l'une des chambres communique également avec un accumulateur hydraulique.

En variante, chaque vérin pourrait être un vérin à membrane déformable.

Le système est complété par des capteurs de position qui sont répartis le long du châssis pour permettre à une unité centrale de commander les différentes unités de dosage des réseaux hydrauliques en fonction des informations transmises par les capteurs pour repositionner le châssis suivant les degrés de liberté autorisés par le système.

Le système selon l'invention permet donc de supporter d'une manière isostatique, active ou non, le châssis de l'appareillage, ce qui offre notamment l'avantage de pouvoir utiliser un châssis d'une seule pièce mais dont la masse est notablement réduite.

Le système selon l'invention permet de remplir les fonctions énumérées en préambule, mais il permet également de réduire les flexions parasites du châssis sous l'effet de la gravité, ainsi que les défauts géométriques d'alignement des interfaces de liaison des supports verticaux, latéraux et d'extrémité sur le châssis et sur le sol, ce qui facilite les opérations de montage du système.

D'autres avantages, caractéristiques et détails de l'invention ressortiront de la description explicative qui va suivre, faite en référence aux dessins annexés, donnés uniquement à titre d'exemple et dans lesquels :
- la figure 1 est une vue schématique partielle pour illustrer le principe du système selon un mode de réalisation de l'invention lorsque le châssis de l'appareillage est posé sur le système de support,
- la figure 2 est une vue en perspective simplifiée pour illustrer les réseaux hydrauliques qui alimentent les vérins du système de la figure 1,
- les figures 3 et 4 sont des vues schématiques semblables aux figures 1 et 2 dans le cas où le châssis est suspendu au système de support selon l'invention ,
- les figures 5 et 6 sont des vues schématiques pour illustrer une variante de réalisation du système représenté aux figures 1 et 2, et
- les figures 7 et 8 sont des vues schématiques pour illustrer un autre mode de réalisation du système selon l'invention.

Les composants 1a, 1b, 1c.... d'un appareillage tel qu'un banc optique 1 par exemple, sont montés sur un châssis 3 formé d'une seule pièce et qui est supporté d'une manière isostatique par un système selon l'invention.

Pour des raisons de simplification, le châssis 3 est schématisé sous la forme d'un parallélépipédique sensiblement rectangle sur lequel on distinguera les deux faces supérieure 3a et inférieure 3b, les deux faces latérales longitudinales 3c et les deux faces d'extrémité 3d.

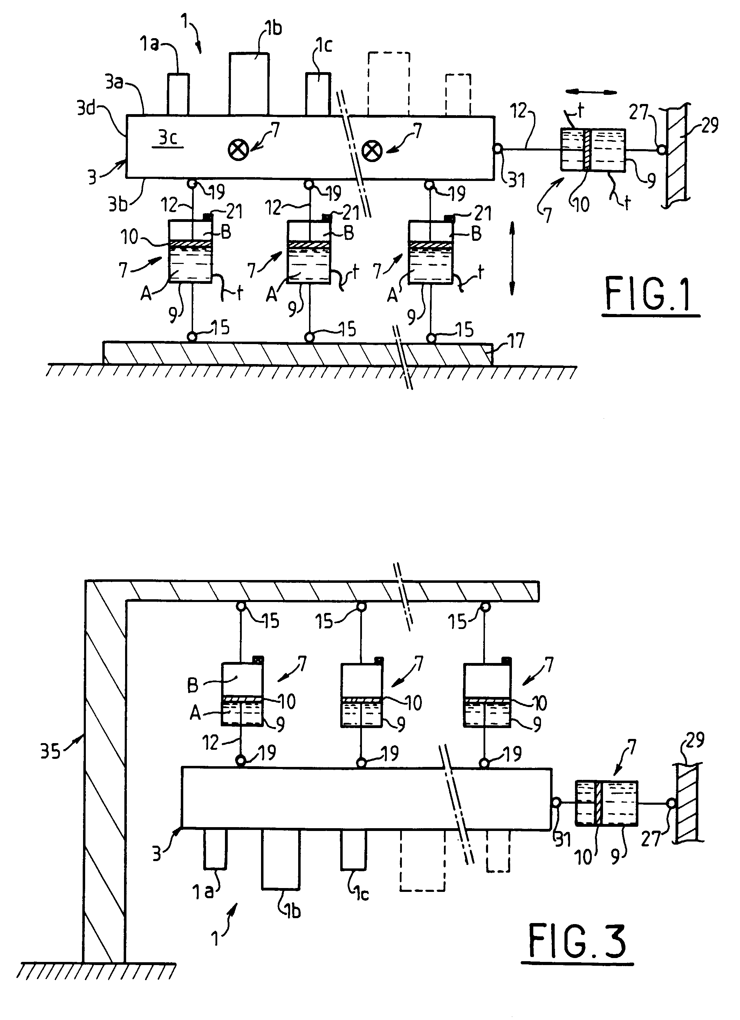

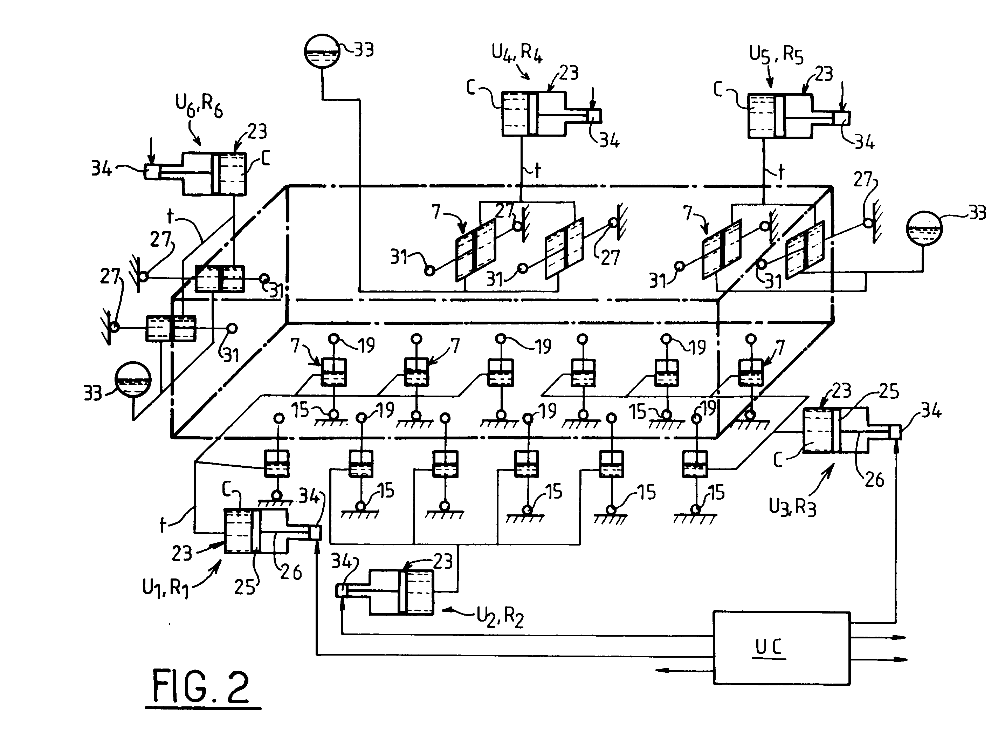

Selon un exemple de réalisation illustré sur les figures 1 et 2, les composants 1a, 1b, 1c.... du banc optique 1 sont montés sur la face supérieure 3a du châssis 3, ce châssis 3 reposant par sa face inférieure 3b sur le système selon l'invention

Le système comprend notamment un ensemble de supports sensiblement verticaux tels que des vérins 7, du type hydraulique par exemple. Chaque vérin 7 peut être constitué, d'une façon connue en soi, par un corps creux 9 dans lequel est monté coulissant un piston 10 qui partage ainsi le volume intérieur du corps 9 en deux chambres A et B à volume variable. Du côté de la chambre B, le piston 10 se prolonge par une tige de piston 12 dont l'extrémité libre fait saillie à l'extérieur du vérin 7.

Le corps 9 de chaque vérin 7 est monté articulé en 15 sur une embase fixe 17 qui repose sur le sol, alors que l'extrémité libre de la tige de piston 12 est montée articulée en 19 à la face inférieure 3b du châssis 3. Les articulations 15 et 19 sont des rotules, par exemple.

Dans l'exemple illustré, le châssis 3 est supporté par douze vérins 7 (figure 2), le nombre et la position de ces vérins 7 étant déterminés en fonction des dimensions et de la masse du châssis 3, de manière à ce que ce dernier soit supporté sans déformation et contrainte mécanique excessives et que sa masse soit régulièrement répartie ou équilibrée sur l'ensemble des points d'appui 19 du système et en évitant tout hyperstatisme.

Avantageusement, le système support est du type isostatique actif pour permettre un repositionnement du châssis 3 suivant plusieurs degrés de liberté.

A cet effet, les douze vérins 7 sont répartis en trois réseaux hydrauliques actifs R1, R2 et R3 qui comprennent chacun quatre vérins 7.

Les quatre vérins 7 du réseau hydraulique R1 sont commandés à partir d'une unité de dosage U1 qui alimente simultanément en fluide les chambres inférieures A des vérins 7, alors que les chambres supérieures B sont mises à l'échappement par un clapet 21. Les chambres A des vérins 7 sont raccordées par des tubulures flexibles t à l'unité U1. Il en est de même pour l'alimentation des vérins des réseaux hydrauliques R2 et R3 qui sont alimentés à partir d'unités de dosage U2 et U3, respectivement.

Chaque unité de dosage U1, U2 et U3 est par exemple constituée par un vérin 23 qui comprend une chambre C à volume variable remplie d'un fluide qui est acheminé dans les tubulures t des réseaux hydrauliques R1 à R3 par un piston 25 mobile en translation et commandé par une unité centrale UC qui est reliée aux unités de dosage U1, U2 et U3.

Lorsqu'un positionnement du châssis 3 dans l'espace n'est pas nécessaire, les unités de dosage sont alors supprimées, les réseaux hydrauliques étant alors passifs.

Le système comprend également des supports latéraux qui sont constitués par des vérins 7. Le corps 9 de chaque vérin est monté articulé en 27 sur un montant vertical 29 qui est ou non solidaire de l'embase 17, alors que l'extrémité libre de la tige de piston 12 est montée articulée en 31 sur une face longitudinale 3c du châssis 3. Les articulations 27 et 31 sont des rotules par exemple.

Dans cet exemple, le nombre des supports latéraux est de quatre, mais ce nombre et la position des vérins 7 varient notamment en fonction de la répartition de la masse et de la longueur du châssis 3.

Pour assurer un contrôle du positionnement du châssis 3 suivant deux autres degrés de liberté, les quatre vérins 7 sont répartis en deux réseaux R4 et R5 comprenant chacun deux vérins 7. Les deux réseaux R4 et R5 sont alimentés à partir de deux unités de dosage U4 et U5, respectivement. Les deux chambres A de chaque vérin 7 communiquent avec l'unité de dosage associée par des tubulures flexibles t, alors que les chambres B communiquent avec un accumulateur hydraulique.

Enfin, le système comprend également des supports d'extrémité qui sont également constitués par des vérins 7. Dans l'exemple illustré, les supports d'extrémité sont constitués par deux vérins 7 qui sont alimentés par un réseau hydraulique actif R6 pour assurer le contrôle du positionnement du châssis 3 suivant un degré de liberté supplémentaire. Les deux vérins 7 sont montés articulés sur le châssis 3 et sur un montant vertical (non représenté), d'une manière semblable aux vérins 7 des supports latéraux.

D'une manière générale, toutes les unités de dosage U1 à U6 sont commandées à partir d'une unité centrale UC. A titre d'exemple, la tige de piston 26 du vérin 23 de chaque unité de dosage est commandée en translation à partir d'un système vis-écrou 34 qui convertit la rotation de l'arbre de sortie d'un moteur en un mouvement de translation. Un moteur équipe alors chaque unité de dosage et ce moteur est commandé à partir de l'unité centrale UC. A cet effet, des capteurs de position sont répartis le long du châssis 3 pour mesurer la position du banc optique 1 par rapport à un référentiel de positionnement, les mesures de ces capteurs étant transmises à l'unité centrale UC.

Ainsi, selon ce mode de réalisation illustré sur les figures 1 et 2, le châssis 3 est supporté d'une manière isostatique avec en plus la possibilité de repositionner le châssis 3 suivant les six degrés de liberté au moyen des réseaux hydrauliques actifs R1 à R6.

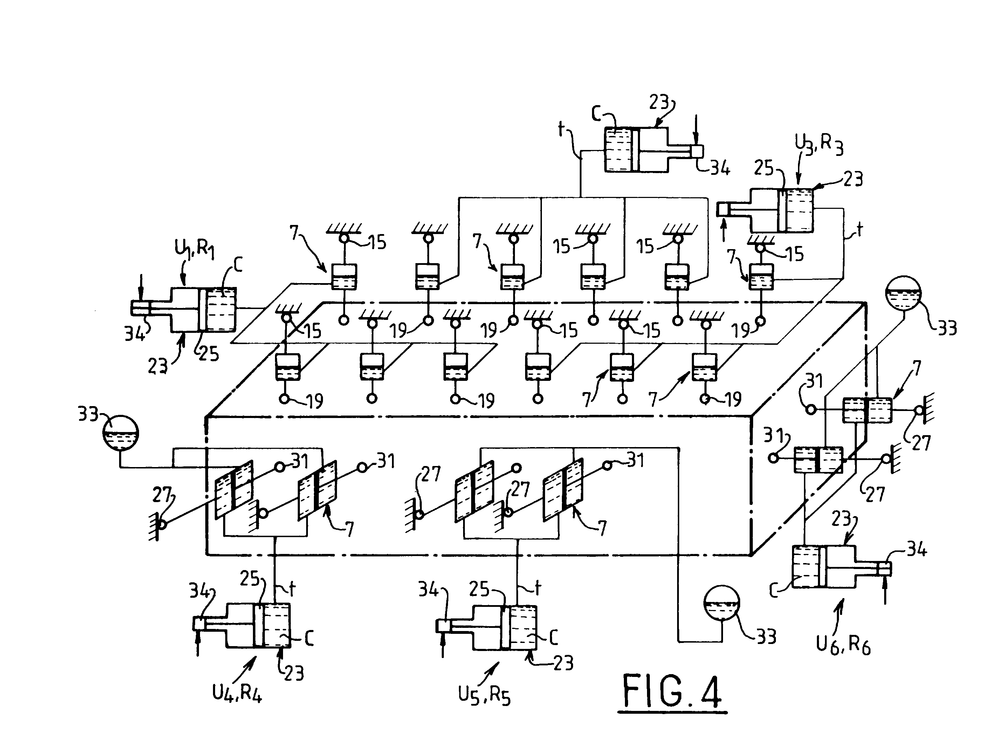

Selon un second mode de réalisation illustré aux figures 3 et 4, le châssis 3 est cette fois-ci suspendu au système de support. Par rapport au mode de réalisation illustré sur les figures 1 et 2, les composants 1a, 1b et 1c du banc optique 1 sont par exemple fixés sur la face inférieure 3b du châssis 3, alors que les vérins 7 des supports verticaux sont montés articulés entre une structure fixe 35 tel qu'un portique par exemple, et la face supérieure 3a du châssis 3.

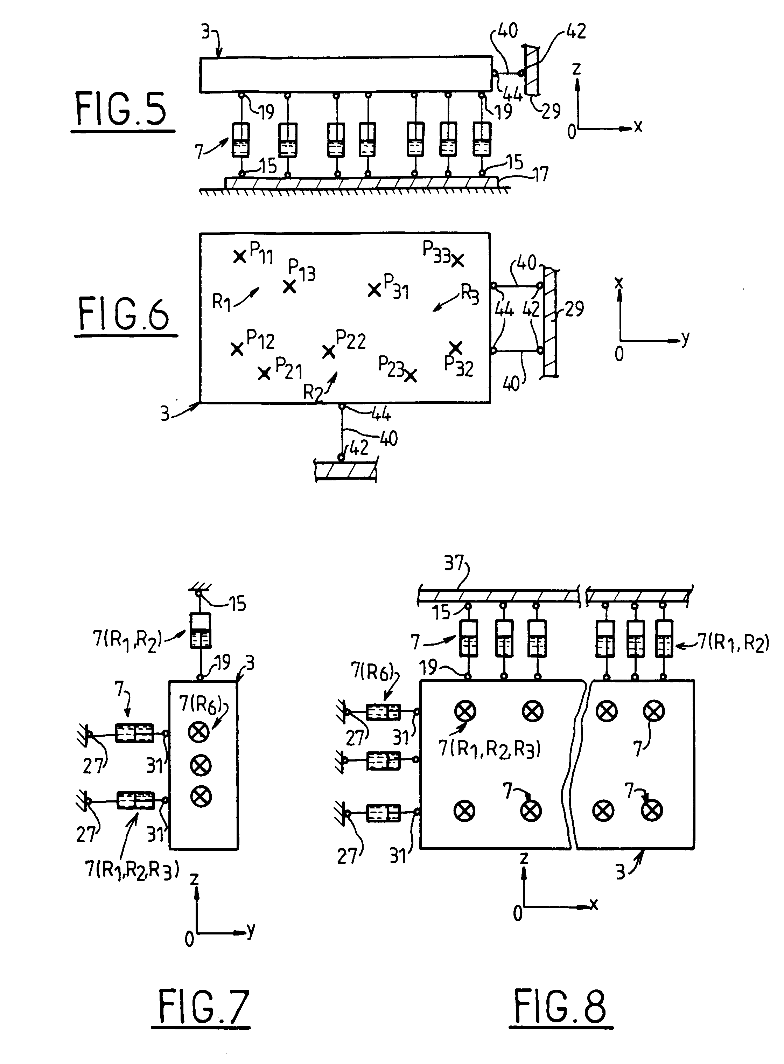

Le mode de réalisation illustré sur les figures 5 et 6 est une variante du premier mode de réalisation illustré sur les figures 1 et 2, le châssis 3 étant sensiblement de forme carrée par exemple.

Dans ce mode de réalisation, les supports latéraux et d'extrémité du système sont constitués par des biellettes articulées 40. Chaque biellette 40 est articulée en 42 au châssis 3 d'une part, et en 44 à une structure fixe 29.

Le châssis 3 est posé sur les supports verticaux constitués par des vérins 7 agencés de la même manière que celle illustrée aux figures 1 et 2.

Selon ce mode de réalisation, le système supporte le châssis 3 d'une manière isostatique par l'intermédiaire des supports verticaux, avec la possibilité de contrôler le positionnement du châssis 3 suivant trois degrés de liberté qui sont définis à partir de trois réseaux hydrauliques actifs R1, R2 et R3.

Plus précisément, en se reportant à la figure 6, les vérins 7 des supports verticaux sont au nombre de neuf et sont répartis en trois réseaux hydrauliques actifs R1, R2 et R3 qui comprennent chacun trois vérins 7. Les vérins 7 du réseau R1 définissent trois points d'appui P11, P12 et P13, ceux du réseau R2 définissent trois points d'appui P21, P22 et P23, alors que ceux du réseau R3 définissent trois points d'appui P31, P32 et P33.

Les figures 7 et 8 illustrent un autre mode de réalisation selon l'invention. Ce mode de réalisation peut être utilisé pour suspendre le châssis 3 lorsque celui-ci est étroit, haut et s'étend sur une grande longueur par exemple.

Selon cette variante, les supports verticaux sont constitués par un ensemble de vérins 7 qui sont répartis suivant deux réseaux hydrauliques actifs R1 et R2, les supports latéraux sont constitués par un ensemble de vérins 7 qui sont répartis suivant trois réseaux hydrauliques R3, R4 et R5, alors que les supports d'extrémité sont constitués par des vérins reliés à un réseau hydraulique actif R6. Il est ainsi possible de contrôler le positionnement du châssis 3 suivant les six degrés de liberté.

En variante, les supports d'extrémité peuvent être constitués par des biellettes articulées 40, c'est-à-dire que le contrôle du positionnement du châssis ne peut alors se faire que suivant cinq degrés de liberté.

D'une manière générale, le châssis 3 peut être constitué par une plaque d'une certaine épaisseur ou par un treillis de poutraison, le choix dépendant de la nature du banc optique à supporter.

L'invention a été décrite en prenant l'exemple d'un banc optique mais ce banc pourrait être tout aussi bien une chaîne laser. Le système peut donc être utilisé pour supporter un appareillage de mesure quelconque.

## Revendications

1. Système pour supporter un appareillage de grandes dimensions, en particulier un banc optique (1), l'appareillage comprenant un ensemble de composants (1a, 1b, 1c.....) montés sur un châssis (3) d'une seule pièce, caractérisé en ce que le système est du type isostatique et comprend au moins un ensemble de supports verticaux constitués par des vérins (7) qui sont articulés d'une part, à une structure fixe (17) et d'autre part, au châssis (3) pour définir des points d'appui sur lesquels le châssis (3) est posé et/ou de points de suspension auxquels le châssis (3) est suspendu, la position et le nombre de ces points d'appui et/ou de suspension étant choisis pour que la masse du châssis (3) soit régulièrement répartie entre ces différents points, et en ce que les vérins (7) formant les supports verticaux sont alimentés en fluide sous pression à partir de plusieurs réseaux hydrauliques (R1, R2, R3).

2. Système selon la revendication 1, caractérisé en ce que les vérins (7) formant les supports verticaux sont répartis en plusieurs ensembles pour pouvoir contrôler plusieurs degrés de liberté, les vérins (7) de chaque ensemble étant alimentés à partir d'un réseau hydraulique actif relié à une unité de dosage de fluide (U1, U2, U3) pour repositionner le châssis (3) suivant le degré de liberté contrôlé par chaque ensemble de vérins (7).

3. Système selon la revendication 1 ou 2, caractérisé en ce que le châssis (3) est par exemple de forme parallélépipédique rectangle avec deux faces supérieure (3a) et inférieure (3b), deux faces latérales longitudinales (3c) et deux faces latérales d'extrémité (3d), en ce que les points d'appui et/ou de suspension du châssis (3) sont situés sur les faces supérieure (3a) et/ou inférieure (3b) de celui-ci, en ce que le système comprend des supports latéraux qui sont articulés, d'une part, à la structure fixe (17)et, d'autre part, à la une face latérale longitudinale (3c) du châssis (3), et en ce que le système comprend également des supports d'extrémité qui sont articulés d'une part, à la structure fixe (17) et, d'autre part, à une face latérale d'extrémité (3d) du châssis (3).

4. Système selon la revendication 3, caractérisé en ce que les vérins (7) des supports verticaux qui définissent les points d'appui et/ou de suspension du châssis (3) sont répartis suivant trois réseaux hydrauliques actifs (R1, R2 et R3) pour assurer un contrôle du positionnement du châssis (3) suivant trois degrés de liberté.

5. Système selon la revendication 4, caractérisé en ce que les supports latéraux du système sont constitués par des vérins (7).

6. Système selon la revendication 5, caractérisé en ce que les vérins (7) des supports latéraux sont répartis suivant deux réseaux hydrauliques actifs (R4 et R5) pour assurer en plus un contrôle du positionnement du châssis (3) suivant deux autres degrés de liberté.

7. Système selon la revendication 6, caractérisé en ce que les supports d'extrémité du système (5) sont constitués par au moins un vérin (7) relié à un réseau hydraulique actif (R6) pour assurer en plus un contrôle du positionnement du châssis (3) suivant un autre degré de liberté.

8. Système selon la revendication 4, caractérisé en ce que les supports latéraux du système (5) sont constitués par des biellettes articulées (40).

9. Système selon la revendication 6 ou 8, caractérisé en ce que les supports d'extrémité du système sont constitués par des biellettes articulées (40).

10. Système selon la revendication 3, caractérisé en ce que lorsque le châssis (3) est d'une grande longueur et étroit, le châssis (3) est suspendu à des supports verticaux qui définissent les points de suspension du châssis (3), les vérins étant répartis suivant deux réseaux hydrauliques actifs (R1, R2) pour assurer en plus un contrôle du positionnement du châssis (3) suivant deux degrés de liberté.

11. Système selon la revendication 10, caractérisé en ce que les supports latéraux du système sont constitués par des vérins (7)répartis suivant trois réseaux hydrauliques actifs (R3, R4, R5) pour assurer en plus un contrôle du positionnement du châssis suivant trois autres degrés de liberté.

12. Système selon la revendication 10 ou 11, caractérisé en ce que les supports d'extrémité du système (5) sont constitués par au moins un vérin (7) relié à un réseau hydraulique actif (R6) pour assurer un contrôle du positionnement du châssis (3) suivant un autre degré de liberté.

13. Système selon la revendication 10 ou 11, caractérisé en ce que les supports d'extrémité du système (5) sont constitués par des biellettes articulées (40).

14. Système selon l'une quelconque des revendications 3 à 13, caractérisé en ce que chaque réseau hydraulique actif (R1 à R6) est relié à une unité de dosage (U1 à U6) indépendante qui alimente en fluide les vérins (7) du réseau.

15. Système selon l'une quelconque des revendications précédentes, caractérisé en ce que les vérins (7) sont des vérins à piston ou à membrane déformable.

16. Système selon la revendication 15, caractérisé en ce que chaque vérin (7) comporte un corps creux (9) dans lequel est monté un piston coulissant (10) qui partage le volume intérieur du corps (9) en deux chambres (A, B) à volume variable, le piston (10) se prolongeant d'un côté par une tige (12) qui fait saillie à l'extérieur du corps (9), et en ce que ledit corps (9) est articulé à la structure fixe alors que l'extrémité libre de la tige de piston (12) est articulée au châssis (3).
